# EUROPEAN PATENT APPLICATION

(11) **EP 3 085 327 A2**
(43) Date of publication of application: **26.10.2016**
(21) Application number: 16150010.3
(22) Date of filing: 04.01.2016
(51) Int. Cl.: A61C 7/14

(54) **NEW ORTHODONTIC BRACKET**

(30) Priority: 23.04.2015 CN 201510197026
(71) Applicant: Zhao, Xilin, Chengdu City, Sichuan 610036 (CN); Chen, Yangxi, Chengdu City, Sichuan 610041 (CN)
(72) Inventor: Zhao, Xilin, Chengdu City, Sichuan 610036 (CN); Chen, Yangxi, Chengdu City, Sichuan 610041 (CN)
(74) Representative: Casalonga

(57) **Abstract**

The present invention relates to a new orthodontic bracket, comprising a bracket base 1, characterized in that there is a mesial groove 2 and a distal auxiliary groove 3 in parallel laterally located on the upper and lower sides of the outer surface of bracket base, wherein the said mesial groove 2 and the said distal auxiliary groove 3 have an archwire slot of mesidal groove 2' and an archwire slot of distal auxiliary groove 3' which are lateral and parallel, respectively, and the vertical interval between the center lines of the archwire slot 2' and archwire slot 3' is 0.086-0.196 inches. The present invention also involves a self-ligating cover of buckle type based on double groove, breaking the restrictions of current self-ligating bracket on the groove archwire size to be inserted. A self-ligating bracket with an adjustable extender in the mesial groove is further described herein, realizing the switch between two different contact forms of the archwire and the bracket groove. The bracket as set forth herein is able to effectively control the tooth movements in three-dimensional directions, improve the effect on tooth position and orientation adjustments and shorten the treatment duration.

## Description

### FIELD OF TECHNOLOGY

The present invention belongs to the field of medical device, specifically relating to a new orthodontic bracket.

### BACKGROUND TECHNOLOGY

Malocclusion is a misalignment or incorrect relation between the teeth of two dental arches, and the occlusion disorder and skeletal disharmony of the face is caused thereby. Therefore, two major tasks of orthodontic treatment are: first is position adjustment, namely adjusting the position of teeth so as to correct the malpositioned teeth; second is orientation adjustment, namely adjusting the three-dimensional orientation of teeth, so as to regain normal three-dimensional orientation for abnormally orientated teeth. The purporse of treatment is to achieve normal standard of occlusion, meanwhile improving profile.

Only when the position and orientation of each teeth of two dental arches are normal, the two dental arches can achieve good occlusion.

There are many methods of malocclusion correction, among which the fixed orthodontics is the major one. When using fixed orthodontics to correct malocclusion, the orthodontist applies orthodontic force to each tooth through the interaction between the archwire and the orthodontic bracket bonded on the teeth, and then moves each tooth to the required specific position and controls its three-dimensional orientation. During the orthodontic procedure, the position adjustment and orientation adjustment of teeth are usually realized through two different stages:
(1) Position adjustment: this stage is mainly to adjust the position of teeth, namely move the malpositioned teeth to the right position. Seen from the perspective of biomechanics, in this stage the clearance between the bracket groove and the archwire should be as large as possible, and the contact area between the bracket groove and archwire small, thereby lowering the friction between the two, only then can the malpositioned teeth be corrected to normal position in a relatively short time;
(2) Orientation adjustment: this stage is mainly to adjust three-dimensional orientation of teeth, namely correcting the abnormal dimensional orientation of teeth and returning to normal. Seen from the perspective of biomechanics, the clearance between the bracket groove and the archwire should be as small as possible in this stage, so as to realize the precise fitting between the groove and the archwire, thereby a enough orthodontic force can be applied to three directions to make orientation adjustment to the abnormally oriented teeth.

From the foregoing, in the two stages of position adjustment and orientation adjustment, the requirement of the clearance and friction between the orthodontic bracket and the archwire are different due to different correction objectives. The position adjustment aims to create large clearance and small friction, and the orientation adjustment is intended to reach small clearance and large friction.

During the orthodontics procedure, orthodontic force should be applied to each tooth, in order to move each tooth to the required specific position and control its three-dimensional orientation, thus the fine structure of the orthodontic bracket directly affects the corrective effect. Under the current technology, the corrective effect of clinically used orthodontic brackets is limited, the correction period is relatively long and the overall treatment effect is poor.

The structure design of orthodontic bracket is crucial for the success of position adjustment and orientation adjustment. Currently, orthodontic brackets available in domestic and foreign markets can be divided according its structure:
(1) Single-groove bracket and double-groove bracket according to the number of grooves;
(2) Single-wing bracket (narrow bracket) and double-wing bracket (wide bracket) according to the number of bracket wings;
(3) Ligature bracket and self-ligating bracket according to the connecting method of the archwire and orthodontic bracket.

Generally, the purpose of using a double-groove bracket clinically is to rely on the two archwires placed in the two grooves to form mechanical match, so as to control the three-dimensional position of teeth. However, the distance between two grooves of current double-groove bracket is very close, and both are located at the middle position of the whole bracket, so when used clinically, these two grooves are close to the corresponding position of the center of clinical crown, therefore its correction effect is not signicantly different from single-groove bracket (the groove is usually located at the middle position of the whole bracket, corresponding to the position of the center of clinical crown). Because the center of clinical crown is far from the center of resistance of tooth movement at the tooth root (the center of resistance of tooth is the same with the geometric center of tooth root, and the center of resistance of unirooted teeth is located at the proximal alveolar ridge of the dental long axis, about 1/2 to 1/3 of the root length), when securing the bracket to this position, be it the groove of single-groove bracket or double-groove bracket, it is relatively far from the center of resistance of tooth movement, making it hard to effectively control three directions and reach the treatment requirements for tooth occlusion and profile improvement during orientation adjustment.

### SUMMARY OF THE INVENTION

In view of the deficiency of existing technoloy, the present invention is related to a great bracket that can accurately control three directions of teeth, improve tooth occlusion, coordinate facial proportion, and at the same time shorten the treatment process.

The detailed technical protocols is as follows:
A new orthodontic bracket, comprising a bracket base 1, characterized in that there is a mesial groove 2 and a distal auxiliary groove 3 in parallel laterally located on the upper and lower sides of the outer surface of bracket base, wherein the said mesial groove 2 and the said distal auxiliary groove 3 have an archwire slot of mesidal groove 2' and an archwire slot of distal auxiliary groove 3' which are lateral and parallel, respectively, and the distance between the archwire slot of mesidal groove 2' and the bracket base is greater than that between the archwire slot of distal auxiliary groove 3' and the bracket base, and the vertical interval between the lateral center line of the archwire slot of mesidal groove and that of the archwire slot of distal auxiliary groove lateral is 0.086-0.196 inches.

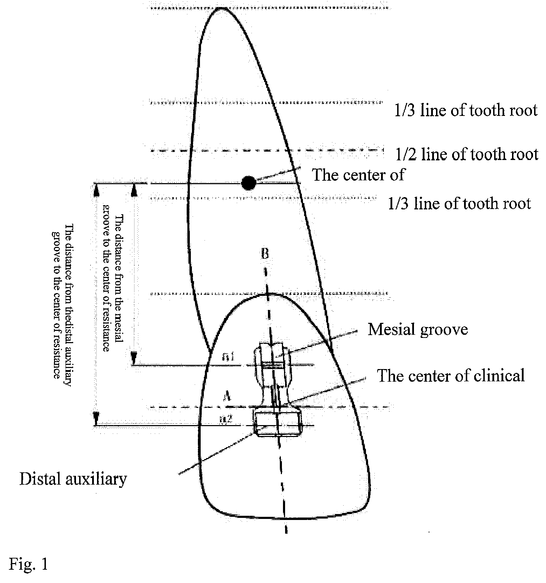

The aforementioned "distal" and "mesial" are defined by the distance between the groove and the center of resistance of tooth movement. The groove close to the center of resistance of tooth movement is the mesial groove, and the one far from the center of resistance of tooth movement is the distal auxiliary groove (as shown in FIG.1). The center of clinical crown is the midpoint of the facial axis of clinical crown, which is the marking point frequently used by the straight archwire bracket. When using the said new bracket, the bracket is placed on the surface of the dental crown, the mesial groove is located at the tooth root of the crown center, the distal auxiliary groove is located at the occlusion part of the crown center, and the distance between the lateral center line a1 of the mesidal groove and the center of clinical crown A is made greater than the distance between the lateral center line a2 of the distal auxiliary groove and the center of clinical crown A. The thin, soft and flexible NiTi round wire is placed into the distal auxiliary groove, and because it is relatively far from the center of resistance of tooth movement, it can promote the fast movement of the teeth and improve the efficiency of position adjustment. The thick, hard and flexible NiTi, beta titanium wire or stainless steel rectangular archwire is placed into the mesial groove, and because it is relatively close to the center of resistance of tooth movement, it can promote precise control of the three-dimensional movement of teeth. The aforementioned archwire slot of distal auxiliary groove can directly use the surface of the bracket base as the undersurface of archwire slot, and the archwire slot of mesidal groove is higher than the surface of bracket base; or, both the archwire slot of mesidal groove and the archwire slot of distal auxiliary groove are higher than the surface of bracket base and the archwire slot of mesidal groove is higher than the archwire slot of distal auxiliary groove. Because the distance between the archwire slot of mesidal groove and the bracket base is greater than that between the archwire slot of distal auxiliary groove and the bracket base, and the distance between the lateral center line of the archwire slot of mesidal groove and that of the archwire slot of distal auxiliary groove is relatively large (0.086-0.196 inches), the mesial groove during use can fully apply the torque effect of the bracket, improve the accuracy of orientation adjustment, so as to meet the different requirements for main and auxiliary grooves in different clinical stages of position adjustment and orientation adjustment.

Further, there is a vertical tube slot 4 located on the aforementioned new bracket base 1 in the longitudinal center line direction The said vertical tube slot 4 is located at the back of the archwire slot of mesidal groove 2' (not intersecting with archwire slot 2'), and passes through the archwire slot of distal auxiliary groove 3' (intersecting with archwire slot 3'). The diameter of the preferred vertical tube slot 4 is 0.018-0.020 inches, so as to insert relevant accessories during the clinical orthodontic treatment.

Arc-shaped bracket base that can better fit with the tooth surface is preferred for the aforementioned new bracket; further, lines can be added to the side of the bracket base that fits with teeth so as to increase the friction with the teeth and fit better.

For the aforementioned new bracket, the preferred distal auxiliary groove 3 is secured on bracket base 1, comprising the upper lateral sidewall 31 and lower lateral sidewall 32 in parallel. The said archwire slot of distal auxiliary groove 3' is enclosed by the inner surfaces of the upper lateral sidewall 31 and lower lateral sidewall 32 and the outer surface of the bracket base; more preferably, the inner surfaces of the said upper lateral sidewall 31 and lower lateral sidewall 32 are wavy folding and relatively protruded. The number of preferred, wavy folding and protruded surfaces is 2-8, equally spaced and / or symmetrical. The preferred single folding surface 33 is rectangular or trapezoidal, intersecting two by two to form the intersecting lines that are parallel with lateral sidewalls 31 or 32; when the archwire is placed into the distal auxiliary groove 3, the intersecting lines of the folding surfaces of the upper and lower sidewall of the archwire and groove form paired point contact.

Futher, the upper lateral sidewall 31 and lower lateral sidewall 32 of the aforementioned distal auxiliary groove extend, arch and intersect to form a top wall of groove 34, forming a tubular groove with an arch-shaped inner top wall and an opening to the buccal and labial side. Each paired upper or lower folding surface on the inner surface of the upper lateral sidewall 31 and lower lateral sidewall 32 extend upward, arch and intersect with the inner top wall of the groove to form a smooth cambered surface.

The said mesial groove can adopt the commonly used single-groove bracket shape of this field. A Tip-edge bracket is preferred as the main groove shape, with a square archwire slot structure, and the various straight archwire techniques of orthodontics can be followed. The archwire groove structure includes the parallel upper wall and lower wall stretched along the direction of the groove base wall; further, the archwire groove can have an upper wavy wall and a lower wavy wall with curved edges, or walls with multiple edges.

In a preferred protocol of the said new bracket, the said mesial groove 2 is square; further, the said mesial groove 2 includes a groove base 21 secured on the bracket base and two upper and lower sidewalls 22 & 23 thereof. The said upper sidewall 22 and lower sidewall 23 extend outward to form an upper bracket wing 24 and a lower bracket wing 25. The surface of the said groove base 21 and the medial surfaces of the upper sidewall 22 and lower sidewall 23 enclose to form an archwire slot 2' of mesidal groove. Further, the main groove can be adopted with a Tip-edge bracket: the upper sidewall 22 of the said mesial groove consists of an upper lateral sidewall 221 and an upper sloped sidewall 222 which is formed by bend upward at one end thereof, with an obtuse angle between them; the lower sidewall 23 consists of a lower lateral sidewall 231 and a lower sloped sidewall 232 which is formed by bend downward at one end thereof, with an obtuse angle between them; specifically, it can be understood as the upper sidewall 22 of the said mesial groove consists of the upper lateral sidewall 221 and the upper sloped sidewall 222 which is formed by bend upper-right at right end thereof, and the lower sidewall 23 of the said mesial groove consists of the lower lateral sidewall 231 and lower sloped sidewall 232 which is formed by bend lower left at left end thereof (or, described as the upper sidewall 22 of the said mesial groove 2 consists of the upper lateral sidewall 221 and the upper sloped sidewall 222 which is formed by bend upper left at left end thereof, and the lower sidewall 23 of the said mesial groove consists of the lower lateral sidewall 231 and the lower sloped sidewall 232 which is formed by bend buttom-right at right end thereof). The upper & lower sloped sidewalls 222 & 232 are located at the two sides of the longitudinal center line of the bracket. The upper & lower lateral sidewalls 221 & 231 are parallel, and the upper & lower sloped sidewalls 222 & 232 are parallel, and the malpositioned teeth can be quickly aligned.

In clinical use, a ligation bracket must use ligature wires or elastic rings to tie the archwire and the orthodontic bracket together. Due to the force of ligation, the sliding friction between the archwire and the groove is relatively large. To solve this problem, a self-ligating bracket is designed. It relies on the one or two sliding or flip cover at the groove opening (or spring clip) to seal the correction archwire inside the groove without using the ligature wires or elastic ligation rings. Although currently there're various self-ligating brackets, all need archwires of suitable size to fit with the three dimensional data of groove, so as to accurately control the orientation adjustment of teeth. While in clinical use, if the archwire reaches a certain size, the metal cover often slides or flips (or spring clip), making it impossible to close or close incompletely (the metal lock cover has two pieces), thereby restricting the usable archwire size of current self-ligating bracket and leading to unsatisfactory orientation adjustment.

The present invention is also related to a self-ligating bracket to address the aforementioned shortcoming. A bracket cover 5 can be added to the said mesial groove 2 and distal auxiliary groove 3. The said bracket cover 5 includes a cover body 51 and a buckle 52 fixed thereto with face to one side of bracket. The said cover body includes a mesial groove cover body 511, a connecting section 512, a distal auxiliary groove cover body 513 and a hinged connecting section 514. The connecting section 512 connects the mesial groove cover body 511 and the distal auxiliary groove cover body 513. The preferred fitting section 5111 located on the upper end of the said mesial groove cover body 511 fits with the inner surface of the upper sidewall 22 of the mesial groove. The bracket cover 5 is hinged to the lower sidewall of the distal auxiliary groove through a connecting section 514; the hinge method is commonly used in this field, such as hole shaft hinging; the hinged connecting section 514 can be located at the lower end or the left & right sides thereof of the distal auxiliary groove cover body 513. There is a hinging fitting section 35 that fits with the hinged connecting section 514 at the lower end or left & right sides of the lower sidewall of the distal auxiliary groove. There is a snap-fit section 53 on the outer side of the lower sidewall 23 of the mesial groove base that fits with the buckle 52, and the snap-fit section 53 can be of lug or slot style.

A preferred protocol for the aforementioned self-ligating bracket is that the inner surface of the said cover body 513 of the distal auxiliary groove is of arch shape.

A preferred protocol of the aforementioned self-ligating bracket is that the said buckle 52 is of cantilever kind, and consists of an arm 521 and a hook 522 located at the end thereof. The preferred buckle arm 521 is straight. There is a missing section 251 on the position corresponding to the snap-fit section 53 on the lower bracket wing 25 of the said mesial groove. The said buckle arm 521 passes through the missing section 251 on the bracket wing and fit with the snap-fit section 53, or, the buckle arm can be in curved shape, and stretch to the snap-fit section 53 along the surface of the lower bracket wing 25 of mesial groove, and fit with the snap-fit section 53 through hook 522.

Because the buckle structure unit of the bracket cover and the bracket is located between the mesial groove and the distal auxiliary groove, the part in the tooth root direction of the cover body 511 of the mesial groove is buckled normally; when the size of used archwire is big enough, the bracket cover can also be buckled to the bracket, and the cover body 511 of mesial groove will be slightly raised up by the archwire. Because the cover body 511 of the mesial groove is movable from the tooth root side part to the lingual direction, and the bracket cover is made up of nitinol with appropriate elasticity, the bracket cover can actively apply force to the archwire, realizing accurate control of the orientation adjustment.

For the single wing (narrow groove) bracket used under the current technology, the contact area between the correction archwire and the orthodontic bracket groove is small, namely the so-called "point contact". No doubt the "point contact" can reduce friction, making it easier to move the teeth during the position adjustment, but the "point contact" also means that the correction archwire cannot fully fit with the bracket during the orientation adjustment or effectively adjust the three-dimensional orientation of teeth, thus the treatment effect is limited. When using the current double-wing bracket (wide bracket) for correction, the contact area between the archwire and the bracket groove is large, namely multiple point contacts. This leads to a big friction between the archwire and the bracket, thus making the teeth harder to move and the treatment duration longer in the position adjustment procedure.

To overcome the aforementioned problem, the present invention describes a new bracket. The said mesial groove 2 also has a detachable groove extender 26 which includes a connecting section 261 and two subgrooves on the left & right 262 (two subgrooves with the same size and shape are preferred), wherein the said connecting section 261 connects the left & right subgrooves 262, each of which consists of a subgroove base 2621 and lateral sidewalls 2622 & 2623 located on the upper and lower sides thereof 2621. There is a mounting groove 27, fitting with the connecting section 261 of the groove extender, in the groove base 21 of the said mesial groove. The upper and lower lateral sidewalls 2622 & 2623 of a subgroove are in the same plane with the upper and lower lateral sidewalls 221 & 231 of the mesial groove respectively. The said subgroove base and the mesial groove base are in the same plane, forming a mesial groove that extends to the left and right (when the left and right subgrooves are in the same size and shape, it can form a extended symmetrical mesial groove).

The professional technician can choose different detachable connection methods, such as buckle, pin, plug, for the mesial groove and groove extender according to the actual requirement.

The aforementioned double-groove self-ligating bracket with a groove extender can be used separately or in combination according to the position adjustment or orientation adjustment stage of orthodontics, specifically:
During the position adjustment of early teeth stage, i.e. alignment and levelling of teeth: (1) Because the inner surfaces of the upper & lower lateral sidewall of the distal auxiliary groove are wavy folding and relatively protruded, when the archwire is placed into the distal auxiliary groove 3, the intersection lines of the folding surfaces of the upper and lower sidewalls of the archwire and the groove form paired point contact, at which moment the friction between the two is relatively small. Meanwhile, a self-ligating cover replaces the ligature wire used for ligating the archwire and the groove, further reducing the friction between the archwire and the groove. The fine wire, such as NiTi round wire of 0.012 or 0.014 inches, is placed into the auxiliary groove, making the teeth alignment quickly. Furthermore, because the mesial groove is narrow, the inner sidewall of the groove consists of the lateral sidewall and the sloped sidewall, forming a point contact between the archwire and the bracket groove; using the thick NiTi round wire in combination with fine wire of the distal auxiliary groove can not only maintain the shape of the dental arch but also quickly complete the teeth alignment at the early stage of treatment. (2) Further, by virtue of the point contact between the archwire and the mesial groove, the NiTi rectangular archwire, stainless steel rectangular archwire or β titanium wire from thin to thick is used to correct the teeth malposition in the vertical dimension and the Spee's curve, so as to quickly level the teeth. (3) In the next orientation adjustment stage, the mesial groove extender is inserted, the bracket groove is lengthened, and the archwire is inserted into the groove and gradually transited to the thickest stainless steel rectangular archwire or P titanium wire, contacting with the groove bearing surface, and meanwhile, the elastic force of the self-ligating cover to the archwire inserted into the mesial groove is used, at which time the friction between the archwire and the groove is large, thereby the three-dimensional orientation of the teeth can be accurately controlled.

For all the aforementioned brackets, the length of the archwire slot of the preferred mesial groove is 0.074-0.145 inches, and after inserting the fitting piece of the groove, the whole archwire slot is 0.019-0.039 inches longer.

For all the aforementioned brackets, the length of the archwire slot of the preferred distal auxiliary groove is 0.137-0.157 inches.

For all the aforementioned brackets, the preferred mesial groove and distal auxiliary groove have an axial tilt β, the numerical value of which is adjusted on the basis of the axial tilt value of the dental crown; when the bracket is used for mandibular incisor, the β value is the axial tilt value of the tooth plus 2°; when the bracket is used for other teeth, the P value is the axial tilt value of the tooth plus 4°, so as to compensate the "Angle escape"caused by the gap between the archwire and the groove.

For all the aforementioned brackets, the archwire slot base plane of preferred mesidal groove and the surface of the bracket base form a torque angle θ, the numerical value of which is adjusted on the basis of the torque angle value of the dental crown; when the bracket is used for the upper teeth, the value of the torque angle θ is the torque angle value of the dental crown of the upper teeth plus 3-14°; when the bracket is used for the lower teeth, the value of torque angle θ is the torque angle value of the dental crown of the lower teeth plus 1-5°.

For all the aforementioned brackets, the preferred mesial groove has a square archwire slot, with the width of 0.018-0.022 inches and the depth of 0.022-0.025 inches; the width of the archwire slot of the distal auxiliary groove is 0.018-0.020 inches, and the depth is 0.018-0.020 inches.

The vertical distance between the lateral center line a1 of the said archwire slot of mesidal groove and that of the center of clinical crown is 0.065-0.147 inches, and the vertical distance between the lateral center line a2 of the said archwire slot of distal auxiliary groove and that of the center of clinical crown is 0.021-0.049 inches.

For all the aforementioned brackets, the longitudinal center line B of the preferred bracket has an angle of inclination γ. Because the vertical tube slot 4 is located along the longitudinal center line of the bracket, the vertical tube slot 4 also has the same angle of inclination γ, γ=0-11°.

For all the aforementioned brackets, the extending line of the inner side of the sloped sidewall and that of the inner side of the lateral sidewall of the preferred mesial groove form an included angle α=20-25°.

All the aforementioned brackets can be made up of any suitable material, such as biological ceramics, crystal ceramics, titanium alloy, plastics and so on.

For all the aforementioned brackets, the fitting surface between the said bracket base and the teeth has anti-sliding lines.

### Advantages :

(1) The interval between the mesial groove and distal auxiliary groove of the said double-groove bracket is d=0.086-0.196 inches, much greater than that of current technology. The distal auxiliary groove is relatively far from the center of resistance of tooth movement, so the orthodontic force can quickly realize teeth tipping movement through filamentary light force, which can accelerate the position adjustment. The mesial groove is close to the center of resistance of tooth movement, thus the elastic force applied by the correction archwire is also close to the center of resistance, realizing the stable movement of all the teeth; this mode of force application can effectively control the movement of teeth in three directions, improve the effect of orientation adjustment and shorten the duration thereof.
(2) The present invention uses a self-ligating cover of buckle style on the basis of the double-groove, skillfully combining the buckle elasticity and cover elasticity; in the first stage of correction, the friction can be decreased greatly, making the teeth movement easier and achieving the goal of quick position adjustment; in the second stage of correction, the restriction on archwire size placed into the groove of the current self-ligating bracket is broken. Force can be applied to the archwire over a certain size, in order to guarantee that the archwire that completely fits with the groove size can accurately control the three-dimensional orientation of teeth, and realize the goal of orientation adjustment.
(3) The present invention makes improvement on the structure of the mesial groove on the basis of the structure of a double-groove bracket combined with a self-ligating cover of bulkle type; switching between the two different contact modes of the archwire and the bracket groove is realized by flexibly controlling the length of the mesial groove of the bracket, thus satisfying the different requirements for friction in different clinical treatment stages. During the position adjustment, the groove is relatively short, and the archwire and bracket groove is in the point contact state with low friction, which is favorable for teeth movement, thereby shortening the course of treatment; during the orientation adjustment, the groove is relatively long, the archwire and bracket groove is in the surface contact state with high friction, which is favorable for the expression of the three-dimensional orientation data of the bracket and for controlling and adjusting the three-dimensional orientation of teeth and improving orthodontic effect.

### DESCRIPTION OF FIGURES

FIG.1 is a schematic diagram of the bracket set forth in Embodiment 1.

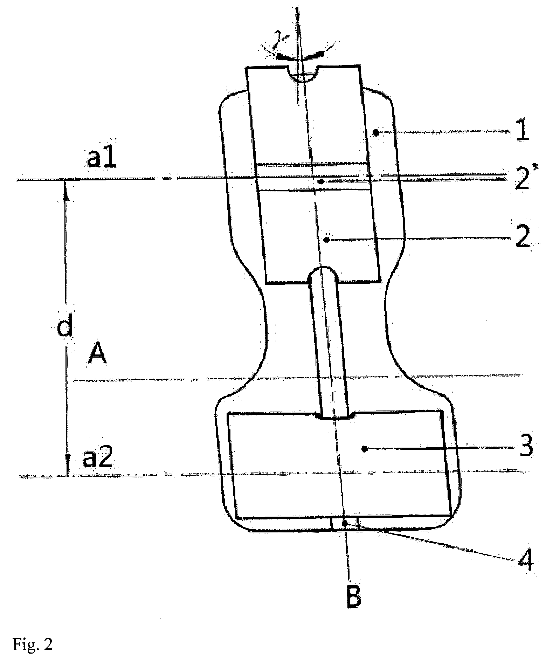

FIG.2 is a front view of the bracket set forth in Embodiment 1 (1 is the bracket base, 2 is the mesial groove, 2' is the lateral center line of the archwire slot of mesidal groove, 3 is the distal auxiliary groove, 4 is the vertical tube slot, a1 is the archwire slot of mesidal groove, a2 is the lateral center line of the archwire slot of distal auxiliary groove, A is the center of clinical crown, B is the longitudinal center line of the bracket, d is vertical interval between the lateral center line of the archwire slot of mesidal groove and the lateral center line of the archwire slot of distal auxiliary groove, and γ is the angle of inclination).

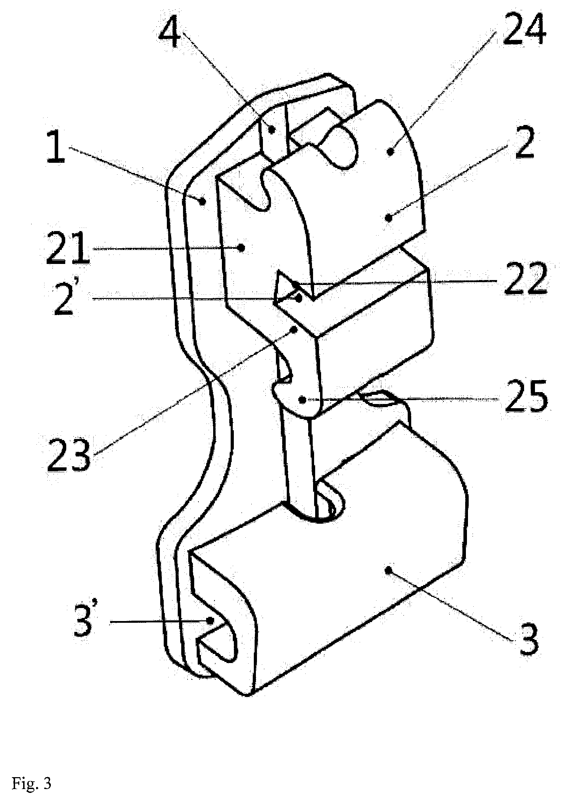

FIG.3 is a schematic diagram of the bracket set forth in Embodiment 1 (1 is the bracket base, 2 is the mesial groove, 3 is the distal auxiliary groove, 2' is the archwire slot of mesidal groove, 3' is the archwire slot of distal auxiliary groove, 4 is the vertical tube slot, 21 is the groove base, 22 is the groove upper sidewall, 23 is the groove lower sidewall, 24 is the upper bracket wing, and 25 is the lower bracket wing).

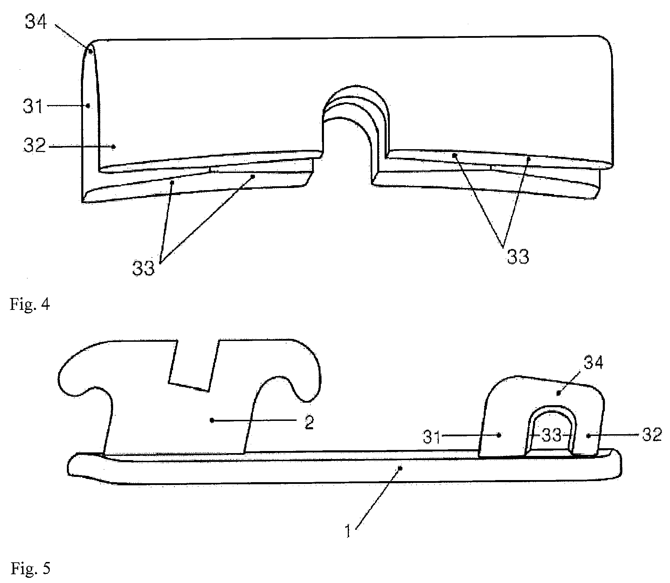

FIG.4 is a schematic diagram of the distal auxiliary groove structure of the bracket set forth in Embodiment 2 (31 is the upper lateral sidewall, 32 is the lower lateral sidewall, 33 is the folding surface, and 34 is the distal auxiliary groove top wall).
FIG.5 is a left view of the bracket set forth in Embodiment 2 (1 is the bracket base, 2 is the mesial groove, 31 is the upper lateral sidewall, 32 is the lower lateral sidewall, 33 is the folding surface, and 34 is the top wall of the groove).

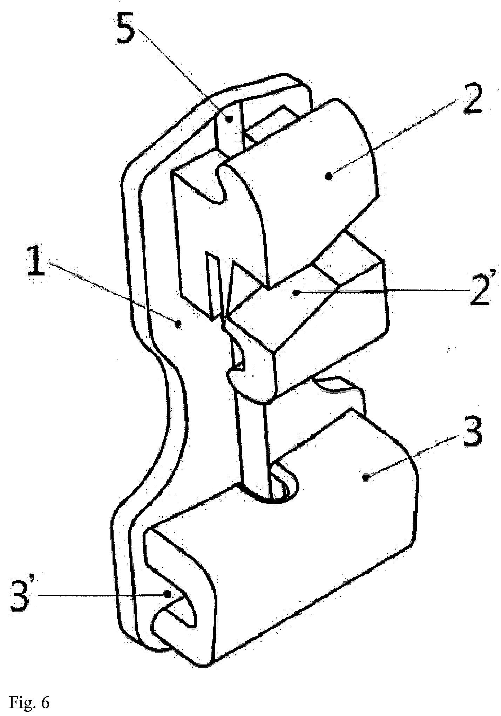

FIG.6 is a schematic diagram of the bracket set forth in Embodiment 3 (1 is the bracket base, 2 is the mesial groove, 2' is the archwire slot of mesidal groove, 3 is the distal auxiliary groove, 3' is the archwire slot of distal auxiliary groove, and 4 is the vertical tube slot).

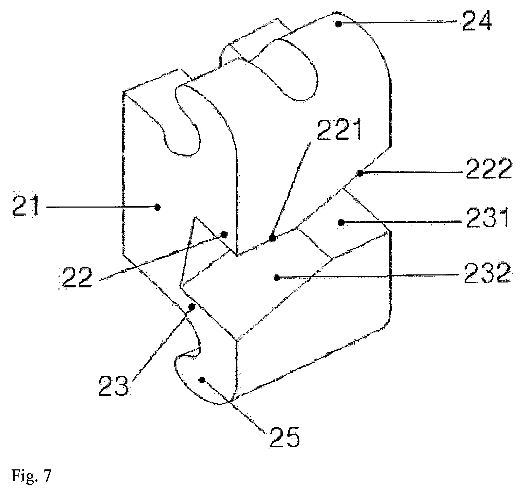

FIG.7 is a schematic diagram of the mesial groove structure of the bracket set forth in Embodiment 3 (21 is the groove base, 22 is the groove upper sidewall, 23 is the groove lower sidewall, 24 is the upper bracket wing, 25 is the lower bracket wing, 221 is the upper lateral sidewall, 222 is the upper sloped sidewall, 231 is the lower lateral sidewall, and 232 is the lower sloped sidewall).

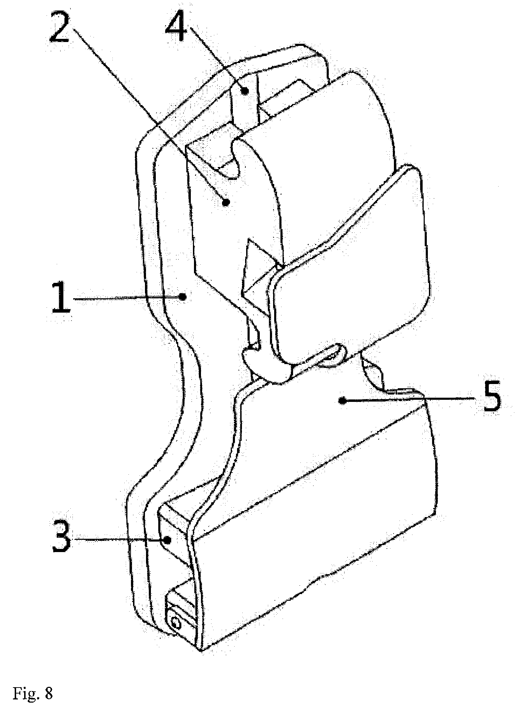

FIG.8 is a schematic diagram of the bracket set forth in Embodiment 5 (1 is the bracket base, 2 is the mesial groove, 3 is the distal auxiliary groove, 4 is the vertical tube slot, and 5 is the bracket cover).

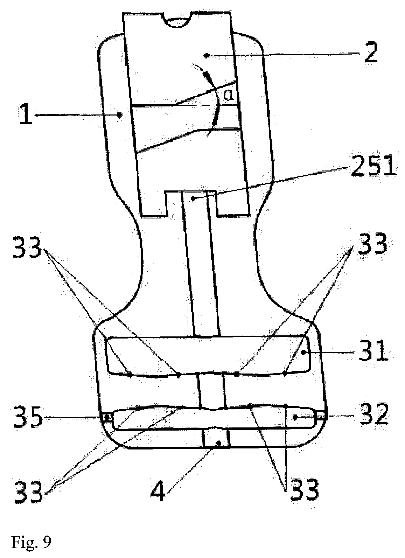

FIG.9 is a front view of the bracket, set forth in Embodiment 5, without a bracket cover (1 is the bracket base, 2 is the mesial groove, 4 is the vertical tube slot, 251 is the missing section of the mesial groove, 31 is the upper lateral sidewall of the distal auxiliary groove, 32 is the lower lateral sidewall of the distal auxiliary groove, 33 is the folding surface of the upper and lower sidewalls of the distal auxiliary groove, 35 is the hinging fitting section, and a is the included angle).

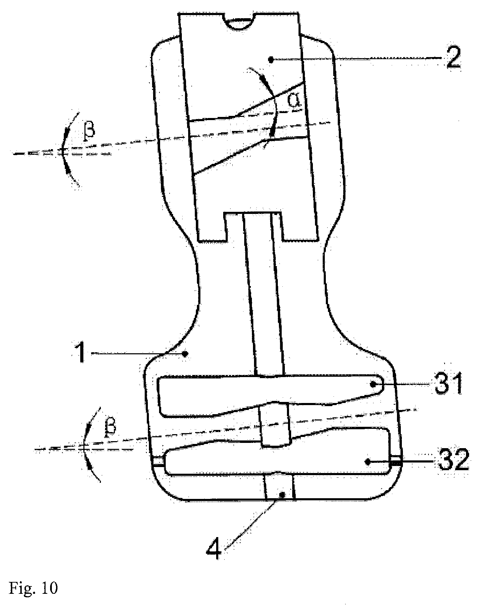

FIG.10 is a schematic diagram of the bracket, set forth in Embodiment 5, with the axial tilt (1 is the bracket base, 2 is the mesial groove, 4 is the vertical tube slot, 31 is the upper lateral sidewall of the distal auxiliary groove, 32 is the lower lateral sidewall of the distal auxiliary groove, and β is the axial tilt).

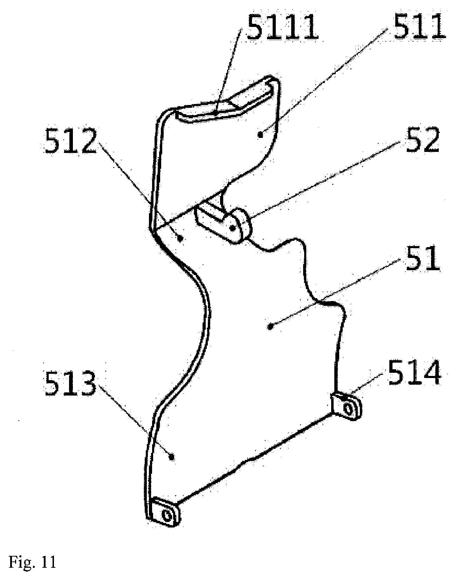

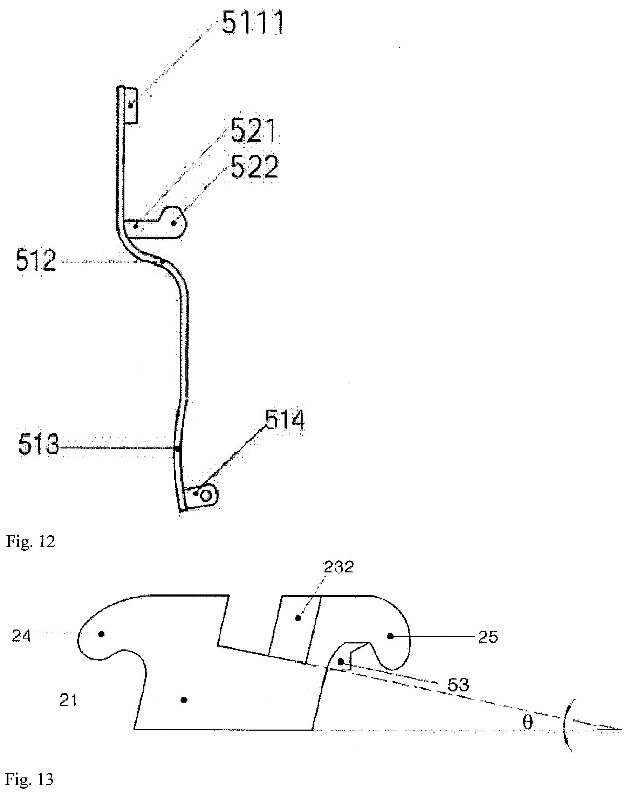

FIG.11 & 12 is a schematic diagram of the bracket cover set forth in Embodiment 5 (51 is the bracket cover cover body, 52 is the buckle, 511 is the mesial groove cover body, 512 is the connecting section, 513 is the distal auxiliary groove cover body, 514 is the hinged connecting section, 5111 is the fitting section, 521 is the buckle arm of the cantilever buckle, and 522 is the hook).
FIG. 13 is a left view of the mesial groove of the bracket set forth in Embodiment 5 (21 is the groove base of the mesial groove, 24 is the upper bracket wing, 25 is the lower bracket wing, 232 is the lower sloped sidewall, 53 is the snap-fit section, and θ is the torque angle).

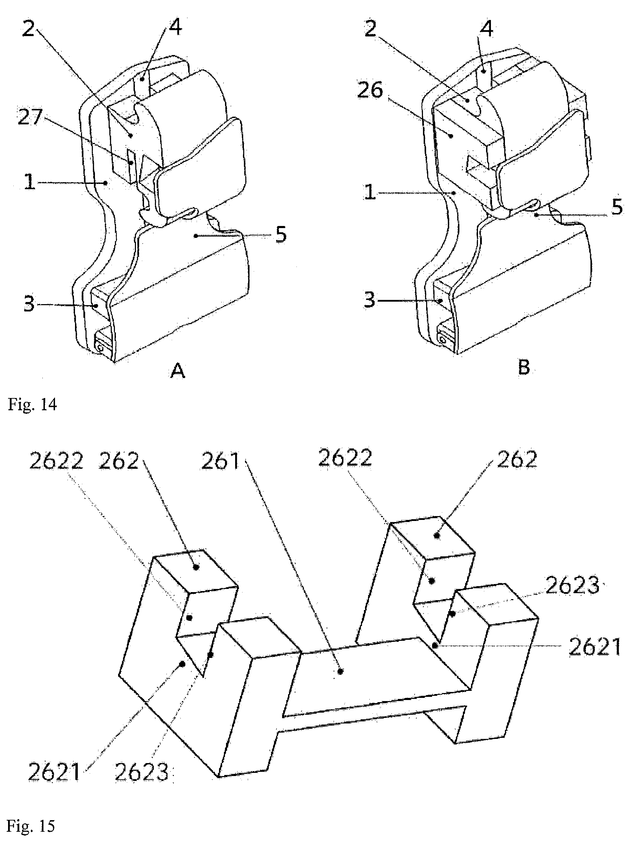

FIG.14 is a schematic diagram of the bracket set forth in Embodiment 6 (FIG.A is a schematic diagram of the bracket structure before installing the extender, FIG.B is a schematic diagram of the bracket structure after installing the extender, 1 is the bracket base, 2 is the mesial groove, 3 is the distal auxiliary groove, 4 is the vertical tube slot, 5 is the bracket cover, 26 is the extender, and 27 is the mounting section).
FIG. 15 is a schematic diagram of the extender of bracket set forth in Embodiment 3 (261 is the connecting section, 262 is the subgroove, 2621 is the subgroove base, 2622 is the upper lateral sidewall, and 2623 is the lower lateral sidewall).

### EMBODIMENTS

### Embodiment 1

A new orthodontic bracket, as shown in FIG.2 and FIG.3, wherein 1 is the bracket base, 2 is the mesial groove, 3 is the distal auxiliary groove, 4 is the vertical tube slot, 2' is the archwire slot of mesidal groove, 3' is the archwire slot of distal auxiliary groove, a1 is the archwire slot of mesidal groove lateral center line, a2 is the archwire slot of distal auxiliary groove lateral center line, A is the center of clinical crown, B is the longitudinal center line of the bracket, d is the vertical interval between the lateral center line of the archwire slot of the mesidal groove and that of the archwire slot of the distal auxiliary groove, 21 is the groove base, 22 is the upper sidewall of the groove, 23 is the lower sidewall of the groove, 24 is the upper bracket wing, and 25 is the lower bracket wing. The bracket set forth in the present invention comprises a bracket base 1, characterized in that there is a mesial groove 2 and a distal auxiliary groove 3 in parallel laterally located on the upper and lower sides of the outer surface of bracket base. The said mesial groove 2 and distal auxiliary groove 3 are located on the upper and lower sides of the center of clinical crown respectively: the mesial groove 2 is on the upper side, and the distal auxiliary groove 3 is on the lower side.The said mesial groove 2 and the said distal auxiliary groove 3 have an archwire slot of mesidal groove 2' and an archwire slot of distal auxiliary groove 3' which are lateral and parallel, respectively, and the distance between the archwire slot of mesidal groove 2' and the bracket base is greater than that between the archwire slot of distal auxiliary groove 3' and the bracket base, and the vertical interval d between the lateral center line a1 of the archwire slot of mesidal groove and a2 of the archwire slot of distal auxiliary groove lateral is 0.086-0.196 inches. There is a vertical tube slot 4, passing through the mesial groove and the distal auxiliary groove, located on the said base in the longitudinal center line B direction. The said vertical tube slot passes through the groove base 21 (located at the back of the archwire slot 2' of the mesidal groove, not intersecting with the archwire slot 2', and through the archwire slot of distal auxiliary groove 3' (intersecting with the archwire slot of distal auxiliary groove 3').

### Embodiment 2

This embodiment makes improvement on the basis of Embodiment 1. The bracket base 1, the mesial groove 2 and the vertical tube slot 4 have the structure as set forth in Embodiment 1. The distal auxiliary groove 3 is secured on the bracket base 1, as shown in FIG.3, FIG.4 and FIG.5, wherein FIG.4 is a schematic diagram of the distal auxiliary groove structure of the bracket set forth in Embodiment 2 (1 is the bracket base, 2 is the mesial groove, 3' is the archwire slot of distal auxiliary groove, 31 is the upper lateral sidewall, 32 is the lower lateral sidewall, 33 is the folding surface, and 34 is the top wall of the groove).

The said distal auxiliary groove 3 comprises the upper lateral sidewall 31 and lower lateral sidewall 32 in parallel. The said archwire slot of distal auxiliary groove 3' is enclosed by the inner surfaces of the upper lateral sidewall 31 and lower lateral sidewall 32 and the outer surface of the bracket base; the inner surfaces of the said upper lateral sidewall 31 and lower lateral sidewall 32 are wavy folding and relatively protruded. The number of the wavy folding and protruded surfaces is 4, symmetrical on both sides; the single folding surface 33 is rectangular, which intersect two by two and form intersecting lines that are parallel with lateral sidewall 31 or 32; when the archwire is placed into the distal auxiliary groove 3, the upper and lower sidewalls of the archwire and groove form paired point contact. The two lateral sidewalls of the distal auxiliary groove extend, arch and intersect to form a top wall of groove 34, forming a tubular groove with an arch-shaped inner top wall and an opening to the buccal and labial side. The paired upper and lower folding surfaces on the inner surface of the upper lateral sidewall 31 and lower lateral sidewall 32 extend upward, arch and intersect with the inner top wall of the groove to form a smooth cambered surface.

### Embodiment 3

Based on Embodiment 2, this embodiment has the structure of the bracket base 1, the proximal auxiliary groove 2 and the vertical tube slot 4, and the structure of the mesial groove is improved, as shown in FIG.6 and FIG.7, wherein 1 is the bracket base, 2 is the mesial groove, 3 is the distal auxiliary groove, 4 is the vertical tube slot, 21 is the groove base, 22 is the groove upper sidewall, 23 is the groove lower sidewall, 24 is the upper bracket wing, 25 is the lower bracket wing, 221 is the upper lateral sidewall, 222 is the upper sloped sidewall, 231 is the lower lateral sidewall, and 232 is the lower sloped sidewall.

The mesial groove 2 is square, including the groove base 21 secured on the bracket base and the upper and lower sidewalls 22 & 23 thereof. The said upper sidewall 22 and lower sidewall 23 extend outward to form an upper bracket wing 24 and a lower bracket wing 25. The surface of the said groove base 21 and the inner surfaces of the upper sidewall 22 and lower sidewall 23 enclose to form an archwire slot 2' of the mesidal groove. The upper sidewall 22 of the said mesial groove consists of the upper lateral sidewall 221 and the upper sloped sidewall 222 which is formed by bend upper-right at right end thereof, and the lower sidewall 23 of the said mesial groove consists of the lower lateral sidewall 231 and lower sloped sidewall 232 which is formed by bend lower left at left end thereof (or, described as the upper sidewall 22 of the said mesial groove consists of the upper lateral sidewall 221 and the upper sloped sidewall 222 which is formed by bend upper left at left end thereof, and the lower sidewall 23 of the said mesial groove consists of the lower lateral sidewall 231 and the lower sloped sidewall 232 which is formed by bend buttom-right at right end thereof). The upper & lower sloped sidewalls 222 & 232 are located at the two sides of the longitudinal center line of the bracket. The upper & lower lateral sidewalls 221 & 231 are parallel, and the upper & lower sloped sidewalls 222 & 232 are parallel.

### Embodiment 4

This embodiment chooses the suitable size on the basis of Embodiment 1-3 respectively. The diameter of the vertical tube slot 4 is 0.018-0.020 inches, and the bracket base 1 has an arc-shaped surface that fits with teeth. The length of the archwire slot of mesial groove is 0.074-0.145 inches, the width is 0.018-0.022 inches, and the depth is 0.022-0.025 inches. The vertical distance between the lateral center line a1 of the said archwire slot of mesidal groove and the lateral center line of the center of clinical crown is 0.065-0.147 inches. The vertical distance between the lateral center line a2 of the said archwire slot of distal auxiliary groove and the lateral center line of the center of clinical crown is 0.021-0.049 inches.

The vertical tube slot has an angle of inclination γ, γ=0-11°. The base planes of the mesidal groove and the bracket base form a torque angle θ; when the bracket is used for upper teeth, the value of torque angle 0 is the torque angle value of the dental crown of the upper teeth plus 3-14°; when the bracket is used for the lower teeth, the value of torque angle θ is the torque angle value of the dental crown of the lower teeth plus 1-5°. The length of the archwire slot of the distal auxiliary groove is 0.137-0.157 inches, the width is 0.018-0.020 inches, and the depth is the 0.018-0.020 inches; the mesial groove and distal auxiliary groove have an axial tilt β, the numerical value of which is adjusted on the basis of the axial tilt value of the dental crown; when the bracket is used for mandibular incisor, the β value is the axial tilt value of the tooth plus 2°; when the bracket is used for other tooth, the β value is the axial tilt value of the tooth plus 4°, so as to compensate the "Angle escape"caused by the gap between the archwire and the groove. The extending line of the inner side of the sloped sidewall of the mesial groove and that of the inner side of the lateral sidewall form an included angle α=20-25°. (See FIG.2 for the angle of inclination γ, FIG.10 for the included angle a and axial tilt β, and FIG. 13 for the torque angle 0).

When using the said bracket, the bracket is placed on the surface of the dental crown so that the mesial groove is close to the center of resistance of tooth movementa and the distal auxiliary groove is far from the center of resistance of tooth movement, the mesial groove is located at the tooth root of the crown center, the distal auxiliary groove is located at the occlusion part of the crown center, and the distance between the lateral center line a1 of the mesidal groove and the center of clinical crown A is made greater than the distance between the lateral center line a2 of the distal auxiliary groove and the center of clinical crown A. The thin, soft and flexible NiTi round wire is placed into the distal auxiliary groove, and because it is relatively far from the center of resistance of tooth movement, it can promote the fast movement of the teeth and improve the efficiency of position adjustment. The thick, hard and flexible NiTi or stainless steel rectangular archwire is placed into the mesial groove, and because it is relatively close to the center of resistance of tooth movement, it can promote precise control of the three-dimensional movement of teeth.

The interval between the mesial groove and distal auxiliary groove of the said double-groove bracket is d=0.086-0.196 inches, much greater than that of current technology, and the distal auxiliary groove is relatively far from the center of resistance of tooth movement. The orthodontic force can quickly realize teeth tipping movement through filamentary light force, which can accelerate the position adjustment. The mesial groove is close to the center of resistance of tooth movement, thus the elastic force applied by the correction archwire is also close to the center of resistance, realizing the stable movement of all the teeth; this mode of force application can effectively control the movement of teeth in three directions, improve the effect of orientation adjustment and shorten the duration thereof.

### Embodiment 5

This embodiment makes improvement on the basis of Embodiment 1-4. The bracket base 1, the mesial groove 2 and the vertical tube slot 4 have the structure as set forth in Embodiment 1-4, and the distal auxiliary groove 3 have the structure as set forth in Embodiment 1-4, which is a tubular groove with an arch-shaped inner top wall and an opening to the lingual and buccal side. It can also be an open groove without the top wall 34, as shown in FIG.8 & FIG.9. FIG.9 is a front view of the bracket without bracket cover (1 is the bracket base, 2 is the mesial groove, 4 is the vertical tube slot, 5 is the bracket cover 5, 251 is the missing section of the mesial groove, 31 is the upper lateral sidewall of the distal auxiliary groove, 32 is the lower lateral sidewall of the distal auxiliary groove, 33 is the folding surface of the upper and lower sidewall of the distal auxiliary groove, 35 is the hinging fitting section, β is the axial tilt, and a is the included angle).

There is a bracket cover 5 on the surface of the mesial groove 2 and the distal auxiliary groove 3 on the bracket set forth in this embodiment, as shown in FIG.11 & 12. The said bracket cover 5 includes a cover body 51 and a buckle 52 fixed thereto with face to one side of bracket. The said cover body includes a mesial groove cover body 511, a connecting section 512, a distal auxiliary groove cover body 513 and a hinged connecting section 514. The connecting section 512 connects the mesial groove cover body 511 and the distal auxiliary groove cover body 513. The inner surface of the cover body of the said distal auxiliary groove 513 is arch-shaped. The fitting section 5111 located on the upper end of the said mesial groove cover body 511 fits with the inner surface of the upper sidewall 22 of the mesial groove. The bracket cover 5 is hinged to the lower sidewall of the distal auxiliary groove through a hinged connecting section 514; the hinge method is a kind of hole shaft hinging; the hinged connecting section 514 is located at the lower end or the left & right sides thereof of the distal auxiliary groove cover body 513. There is a hinging fitting section 35 that fits with the hinged connecting section 514 at the lower end or left & right sides of the lower sidewall of the distal auxiliary groove. There is a snap-fit section 53 on the outer side of the lower sidewall 23 of the mesial groove base that fits with the buckle 52, and the snap-fit section 53 is of lug style, as shown in FIG.13. The said buckle 52 is of cantilever kind, and consists of an arm 521 and a hook 522 located at the end thereof. The buckle arm 521 is straight. There is a missing section 251 on the position corresponding to the snap-fit section 53 on the lower bracket wing 25 of the said mesial groove. The said buckle arm 52 passes through the missing section 251 on the lower bracket wing and fits with the snap-fit section 53.

Because the buckle structure unit of the bracket cover and the bracket is located between the mesial groove and the distal auxiliary groove, the part in the tooth root direction of the cover body 511 of the mesial groove is buckled normally; when the size of used archwire is big enough, the bracket cover can also be buckled to the bracket, and the cover body 511 of mesial groove will be slightly raised up by the archwire. Because the cover body 511 of the mesial groove is movable from the tooth root side part to the lingual direction, and the bracket cover is made up of nitinol with appropriate elasticity, the bracket cover can actively apply force to the archwire, realizing accurate control of the orientation adjustment.

### Embodiment 6

This embodiment makes improvement on the basis of Embodiment 5. The bracket base 1, the mesial groove 2, the distal auxiliary groove 3, the vertical tube slot 4 and the bracket cover 5 have the structure as set forth in Embodiment 5. A detachable groove extender 26 is added to the mesial groove 2, as shown in FIG. 14 & 15. FIG. 14 is a schematic diagram of the bracket structure set forth in the Embodiment 6 (Fig. A is a schematic diagram of the bracket structure before installation of the extender, Fig. B is a schematic diagram of the bracket structure after installation of the extender, 1 is the bracket base, 2 is the mesial groove, 3 is the distal auxiliary groove, 4 is the vertical tube slot, 5 is the bracket cover, 26 is the extender, and 27 is the mounting section). FIG.15 is a schematic diagram of an extender of bracket set forth in this embodiment (261 is the connecting section, 262 is the subgroove, 2621 is the subgroove base, 2622 is the upper lateral sidewall, and 2623 is the lower lateral sidewall). The groove extender 26 includes a connecting section 261 and two subgrooves on the left & right 262 of equal size, wherein the connecting section 261 connects the left & right subgrooves 262, each of which consists of a subgroove base 2621 and lateral sidewalls 2622 & 2623 located on the upper and lower sides thereof 2621. There is a mounting groove 27, fitting with the connecting section 261 of the groove extender, in the groove base 21 of the said mesial groove. The upper and lower lateral sidewalls 2622 & 2623 of a subgroove are in the same plane with the upper and lower lateral sidewalls 221 & 231 of the mesial groove respectively. The said subgroove base and the mesial groove base are in the same plane, that is to say, the shape and size of the archwire slot of the subgroove are exactly the same with that of the archwire slot of the mesidal groove, forming a mesial groove that extends to the left and right.

The aforementioned double-groove self-ligating bracket with a groove extender can be used separately or in combination according to the position adjustment or orientation adjustment stage of orthodontics, specifically:
During the position adjustment of early teeth stage, i.e. alignment and levelling of teeth: (1) Because the inner surfaces of the upper & lower lateral sidewall of the distal auxiliary groove are wavy folding and relatively protruded, when the archwire is placed into the distal auxiliary groove 3, the intersection lines of the folding surfaces of the upper and lower sidewalls of the archwire and the groove form paired point contact, at which moment the friction between the two is relatively small. Meanwhile, a self-ligating cover replaces the ligature wire used for ligating the archwire and the groove, further reducing the friction between the archwire and the groove. The fine wire, such as NiTi round wire of 0.012 or 0.014 inches, is placed into the auxiliary groove, making the teeth alignment quickly. Furthermore, because the mesial groove is narrow, the inner sidewall of the groove consists of the lateral sidewall and the sloped sidewall, forming a point contact between the archwire and the bracket groove; using the thick NiTi round wire in combination with fine wire of the distal auxiliary groove can not only maintain the shape of the dental arch but also quickly complete the teeth alignment at the early stage of treatment. (2) Further, by virtue of the point contact between the archwire and the mesial groove, the NiTi rectangular archwire, stainless steel rectangular archwire or β titanium wire from thin to thick is used to correct the teeth malposition in the vertical dimension and the Spee's curve, so as to quickly level the teeth. (3) In the next orientation adjustment stage, the mesial groove extender is inserted, the bracket groove is lengthened, and the archwire is inserted into the groove and gradually transited to the thickest stainless steel rectangular archwire or β titanium wire, contacting with the groove bearing surface, and meanwhile, the elastic force of the self-ligating cover to the archwire inserted into the mesial groove is used, at which time the friction between the archwire and the groove is large, thereby the three-dimensional orientation of the teeth can be accurately controlled.

## Claims

1. A new orthodontic bracket, comprising a bracket base (1), **characterized in that** there is a mesial groove (2) and a distal auxiliary groove (3) in parallel laterally located on the upper and lower sides of the outer surface of bracket base, wherein the said mesial groove (2) and the said distal auxiliary groove (3) have an archwire slot of mesidal groove (2') and an archwire slot of distal auxiliary groove (3') which are lateral and parallel, respectively, and the distance between the archwire slot of mesidal groove (2') and the bracket base is greater than that between the archwire slot of distal auxiliary groove (3') and the bracket base, and the vertical interval between the lateral center line of the archwire slot of mesidal groove and that of the archwire slot of distal auxiliary groove lateral is 0.086-0.196 inches.

2. An orthodontic bracket as set forth in claim 1, **characterized in that** a vertical tube slot (4) is located on the said base in the longitudinal center line direction. The said vertical tube slot (4) is located behind the archwire slot of mesidal groove (2'), and passes through the archwire slot of distal auxiliary groove (3').

3. An orthodontic bracket as set forth in claim 1, **characterized in that** the said distal auxiliary groove (3) is fixed on the bracket base (1), comprising the upper lateral sidewall (31) and lower lateral sidewall (32) in parallel. The said archwire slot of distal auxiliary groove (3') is enclosed by the inner surfaces of the upper lateral sidewall (31) and lower lateral sidewall (32) and the outer surface of the bracket base; the inner surfaces of the said upper lateral sidewall (31) and lower lateral sidewall (32) are wavy folding and relatively protruded.

4. An orthodontic bracket as set forth in claim 1, **characterized in that** the said mesial groove (2) includes a groove base (21) fixed on the base and two sidewalls (22) & (23), upper and lower, of the groove base. The said upper sidewall (22) and lower sidewall (23) extend outward to form an upper wing (24) and a lower wing (25) respectively. The said archwire slot of mesidal groove (2') is enclosed by the surface of the groove base (21) and the inner surfaces of the upper sidewall (22) and lower sidewall (23).

5. An orthodontic bracket as set forth in claim 4, **characterized in that** the upper sidewall (22) of the said mesial groove (2) consists of an upper lateral sidewall (221) and an upper sloped sidewall (222) which is formed by bend upward at one end thereof, with an obtuse angle between them; the lower sidewall (23) consists of a lower lateral sidewall (231) and a lower sloped sidewall (232) which is formed by bend downward at one end thereof, with an obtuse angle between them. The upper and lower sloped sidewall (222), (232) are set on the two sides of the longitudinal center line of the mesial groove (2); the upper and lower lateral sidewalls (221) & (231) are parallel, and the upper and lower sloped sidewall (222) & (232) are also parallel.

6. An orthodontic bracket as set forth in claim 3, **characterized in that** the upper lateral sidewall(31) and lower lateral sidewall (32) of the said distal auxiliary groove extend, arch and intersect to form a top wall of groove (34).

7. A self-ligating bracket with a cover, with the structure as set forth in one of claims 1-6, **characterized in that** there is a cover (5) on the surface of the mesial groove (2) and the distal auxiliary groove (3). The said cover (5) includes a cover body (51) and a buckle fixed thereto with face to one side of bracket (52), wherein the said cover body (51) comprises a mesial groove cover body (511), a connecting section (512), a distal auxiliary groove cover body (513) and a hinged connecting section (514). The hinge joint section (35) is set on the lower sidewall of distal auxiliary groove for purpose of fitting with the hinged connecting section (514). There is a snap-fit section (53), matching with the buckle (52), on the outer surface of the lower sidewall (23) of mesial groove base. The connecting section (512) connects the mesial groove cover body (511) and the distal auxiliary groove cover body (513); the bracket cover (5) is hinged to the lower sidewall of distal auxiliary groove by a hinged connecting section (514) and a hinge joint section (35).

8. An orthodontic bracket as set forth in claim 7, **characterized in that** the fitting section (5111) located on the upper end of the said mesial groove cover body (51) fits with the inner surface of the upper sidewall (22) of the mesial groove.

9. An orthodontic bracket as set forth in claim 7, **characterized in that** the inner surface of the said distal auxiliary groove cover body (513) is arched outwardly.

10. An orthodontic bracket as set forth in claim 7, **characterized in that** the said buckle (52) is of cantilever kind, and consists of an arm (521) and a hook (522) at the end thereof.

11. An orthodontic bracket as set forth in claim 10, **characterized in that** the said arm (521) is straight. There is a missing section (251) on the position corresponding to the slot (53) on the lower wing (25) of the said mesial groove, and the said arm (521) passes through the missing section (251) on the lower wing and buckles with the slot (53).

12. A self-ligating bracket with a groove extender, with the structure as set forth in one of claims 7-11, **characterized in that** the said mesial groove (2) also has a detachable groove extender (26) which includes a connecting section (261) and two subgrooves on the left & right (262), wherein the said connecting section (261) connects the left & right subgrooves (262), each of which consists of a subgroove base (2621) and lateral sidewalls (2622) & (2623) located on the upper and lower sides thereof (2621). There is a mounting groove (27), fitting with the connecting section (261) of the groove extender, in the groove base (21) of the said mesial groove. The upper and lower lateral sidewalls (2622) & (2623) of a subgroove are in the same plane with the upper and lower lateral sidewalls (221) & (231) of the mesial groove respectively. The said subgroove base and the mesial groove base are in the same plane, forming a mesial groove that extends to the left and right.
